# FASCICULE DE BREVET EUROPEEN

(11) **EP 0 774 399 B1**
(45) Date de publication et mention de la délivrance du brevet: **23.02.2000**
(21) Numéro de dépôt: 96402477.2
(22) Date de dépôt: 18.11.1996
(51) Int. Cl.: B62D 1/16, F16D 1/08, F16B 39/10

(54) **Dispositif de maintien en position d'un organe de serrage**
System zum Halten der Position eines Klemmelements
System for holding the position of a clamping element

(30) Priorité: 20.11.1995 FR 9513733
(43) Date de publication de la demande: 21.05.1997
(73) Titulaire: ECIA INDUSTRIE, 92100 Boulogne (FR)
(72) Inventeur: Barneoud, Jean-Marc, 25350 Mandeure (FR); Bertrand, Jean-Marie, Mathay, 25700 Valentigney (FR); Courvoisier, Patrick, 25600 Vieux-Charmont (FR)
(74) Mandataire: Habasque, Etienne Joel Jean-François

(56) Documents cités:
- EP-A- 0 323 298
- EP-A- 0 553 613
- DE-U- 8 901 865

## Description

La présente invention concerne un dispositif de maintien en position d'un organe de serrage.

Plus particulièrement, la présente invention concerne un dispositif de maintien en position d'un organe de serrage muni d'une tête, dans un trou d'une paroi latérale d'un étrier de réception d'un organe complémentaire, utilisable pour relier deux portions d'un ensemble de colonne de direction de véhicule automobile.

Un tel étrier de réception est par exemple utilisé pour raccorder une portion d'arbre de direction à un pignon d'un boîtier de direction de véhicule automobile.

L'organe complémentaire est alors engagé dans l'étrier entre les parois latérales de celui-ci, puis des moyens de serrage comportant un tirant et un écrou, sont engagés dans des trous correspondants de ces parois latérales de l'étrier, pour rapprocher celles-ci et donc serrer l'organe correspondant dans l'étrier.

Cependant, le raccordement de ces portions d'ensemble de colonne est réalisé à l'intérieur de l'habitacle du véhicule et l'on conçoit que l'accès à ces portions d'ensemble de colonne est relativement difficile.

On a déjà développé dans l'état de la technique, des dispositifs qui permettent de maintenir plus ou moins, l'un des organes entrant dans la constitution des moyens de serrage, c'est-à-dire par exemple le tirant ou l'écrou, en position dans le trou correspondant de l'étrier, pour faciliter l'engagement de l'autre organe de ces moyens et le serrage de ceux-ci.

C'est ainsi par exemple que l'on connaît du document EP-A-0 323 298, un dispositif d'accouplement et son application notamment à une direction d'automobile, dans lequel on utilise un cavalier en matériau élastique en U adapté pour chevaucher l'étrier, et qui comporte un bras destiné à coopérer avec une partie des moyens de blocage ou de serrage de manière à la solliciter élastiquement afin qu'elle ait tendance à faire saillie au moins partiellement dans le couloir entre les branches de l'étrier, cette partie des moyens de blocage étant formée par un écrou qui présente un biseau et l'écrou étant engagé dans le trou correspondant de l'étrier de manière à pouvoir y coulisser, lorsque l'organe complémentaire est engagé dans l'étrier.

Ce bras élastique est alors adapté pour coopérer avec l'écrou, de manière que celui-ci puisse s'escamoter lors du passage de l'organe dans l'étrier, puis revenir en position initiale .

On conçoit cependant que cette structure présente un certain nombre d'inconvénients, car le bras doit être suffisamment élastique pour permettre un escamotage aisé de l'écrou lors de l'introduction de l'organe complémentaire dans l'étrier.

Or, cette élasticité du bras se traduit par un maintien incertain en position de l'organe de serrage dans le trou correspondant de l'étrier, ce qui présente des inconvénients notamment lors de l'engagement du tirant.

Par ailleurs, ce bras élastique applique en permanence une contrainte sur l'écrou, ce qui peut poser des problèmes notamment de détermination du couple de serrage à appliquer sur les moyens de serrage pour obtenir une liaison fiable entre l'organe complémentaire et l'étrier.

Le but de l'invention est donc de résoudre ces problèmes.

A cet effet, l'invention a pour objet un dispositif de maintien en position d'un organe de serrage muni d'une tête, dans un trou d'une paroi latérale d'un étrier de réception d'un organe complémentaire, utilisable pour relier deux portions d'un ensemble de colonne de direction de véhicule automobile, caractérisé en ce qu'il comporte un bras s'étendant à partir de l'étrier, dont une extrémité comporte des moyens de fixation sur celui-ci, et l'autre, au moins une languette élastique dirigée vers l'étrier et inclinée vers l'axe du trou, de manière que son extrémité s'étende dans le trajet de déplacement de la tête de l'organe lors de l'engagement ou du dégagement de celui-ci dans ou hors du trou correspondant de l'étrier, afin de former une butée anti-recul de maintien de l'organe en position dans le trou, cette languette étant escamotable radialement par la tête de l'organe lors de l'engagement de celui-ci dans ce trou.

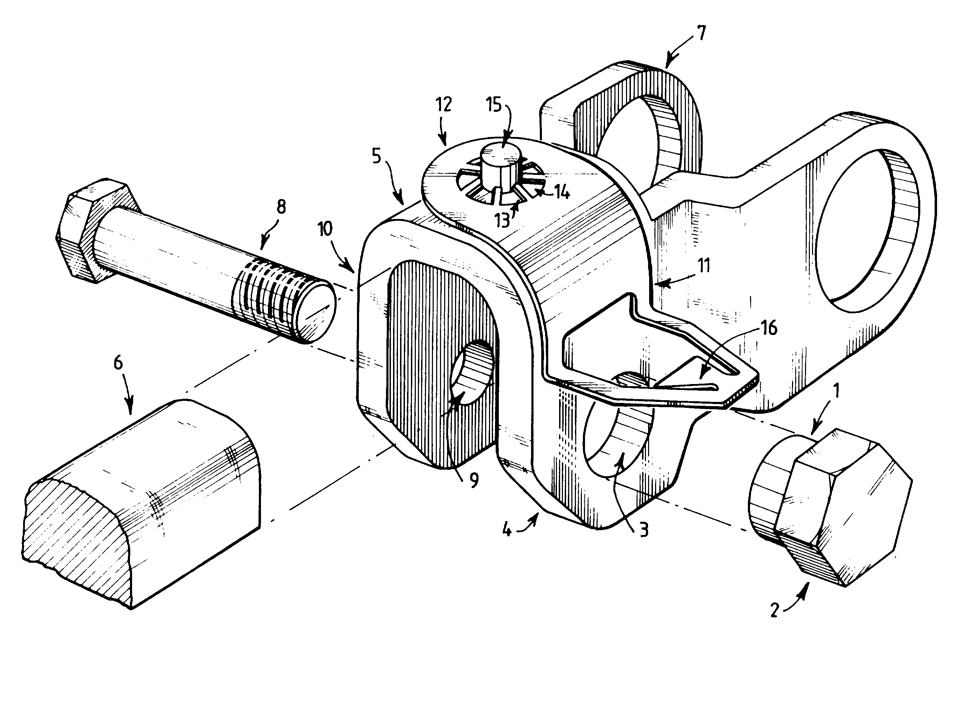

L'invention sera mieux comprise à la lecture de la description qui va suivre, donnée uniquement à titre d'exemple et faite en se référant au dessin annexé, qui représente une vue en perspective éclatée d'un dispositif de maintien en position selon l'invention.

Ainsi qu'on peut le voir sur cette figure, un tel dispositif de maintien en position permet de maintenir un organe de serrage constitué par exemple par un écrou désigné par la référence générale 1, muni d'une tête désignée par la référence 2, dans un trou 3 d'une paroi latérale 4 d'un étrier 5 de réception d'un organe complémentaire 6.

Un tel étrier est par exemple utilisable pour relier deux portions d'un ensemble de colonne de direction de véhicule automobile, et par exemple une fourche de cardan 7 reliée à l'étrier 5, à un pignon d'un boîtier de direction formant l'organe complémentaire 6 décrit précédemment.

L'écrou est adapté pour coopérer avec un tirant désigné par la référence générale 8, ce tirant étant adapté pour être engagé dans un trou 9 de l'autre paroi latérale 10 de l'étrier, en regard du trou 3 de la paroi 4 de l'étrier.

Le dispositif de maintien selon l'invention comporte un bras désigné par la référence générale 11 sur cette figure, qui s'étend à partir de l'étrier et dont une extrémité comporte des moyens de fixation sur celui-ci, désignés par la référence générale 12 sur cette figure.

Ces moyens de fixation comportent par exemple un trou 13 muni de pattes d'accrochage élastiques 14 adaptées pour être engagées sur un téton 15 de la paroi intermédiaire de l'étrier 5 reliant les deux parois latérales de celui-ci.

Une fois que ces pattes 14 sont engagées sur ce téton 15, elles empêchent tout dégagement du bras.

A son autre extrémité, ce bras 11 est muni d'au moins une languette élastique désignée par la référence générale 16 sur cette figure, cette languette élastique étant dirigée vers l'étrier et inclinée vers l'axe du trou correspondant, de manière que son extrémité s'étende dans le trajet de déplacement de la tête 2 de l'organe 1 lors de l'engagement ou du dégagement de celui-ci dans ou hors du trou correspondant 3 de l'étrier 5.

Ceci permet alors à cette languette de former une butée anti-recul de maintien de l'organe et dans l'exemple de réalisation décrit, de cet écrou 1, en position dans le trou correspondant 3 de l'étrier, cette languette 16 étant escamotable radialement par la tête de cet organe lors de l'engagement de celui-ci dans le trou de l'étrier.

On conçoit alors que le montage de l'ensemble de colonne consiste à engager l'organe complémentaire 6 dans l'étrier 5, puis à engager l'écrou 1 dans le trou correspondant 3 de la paroi correspondante 4 de cet étrier.

Lors de cet engagement, la tête 2 de cet écrou 1 vient en contact contre la languette élastique 16, de manière que celle-ci s'escamote radialement pour laisser passer la tête de cet écrou.

Une fois que la tête de l'écrou a franchi la languette 16, celle-ci revient dans sa position initiale, et son extrémité s'étend en regard de cette tête de l'écrou pour empêcher le recul de celui-ci et donc son dégagement du trou correspondant de l'étrier.

L'écrou est alors immobilisé axialement dans le trou correspondant.

Ensuite, le tirant 8 est engagé de l'autre côté de l'étrier et vissé dans l'écrou de manière à serrer les parois latérales de l'étrier et donc l'organe complémentaire dans celui-ci.

L'écrou étant immobilisé en position axiale dans le trou, l'engagement du tirant dans celui-ci est très simple.

Dans l'exemple illustré, la languette est réalisée par découpage et déformation d'une portion du bras s'étendant à peu près à 90° à partir d'une paroi latérale de l'étrier, mais il va de soi bien entendu que différents modes de réalisation de celle-ci peuvent être envisagés.

C'est ainsi-par exemple que cette languette peut être réalisée par déformation de l'extrémité correspondante du bras, cette extrémité étant alors repliée en direction de l'étrier vers l'axe du trou correspondant.

On conçoit alors que cette structure présente un certain nombre d'avantages dans la mesure où elle permet de garantir le maintien en position de l'organe de serrage dans le trou correspondant de l'étrier et ce, sans sollicitation permanente de celui-ci.

Ce maintien en position de l'organe est également assuré pour des efforts d'engagement relativement importantes de l'autre organe des moyens de serrage dans la mesure où la languette assure un très bon maintien en position de l'organe correspondant.

Il va de soi que ce bras et cette languette peuvent également être associés à l'autre organe des moyens de serrage, c'est-à-dire au tirant.

On notera que ce dispositif peut également être muni de moyens de maintien de sécurité en position de l'étrier sur l'organe correspondant, se présentant par exemple sous la forme d'un crochet adapté pour maintenir ces organes l'un sur l'autre.

## Revendications

1. Dispositif de maintien en position d'un organe de serrage muni d'une tête, dans un trou d'une paroi latérale d'un étrier de réception d'un organe complémentaire, utilisable pour relier deux portions d'un ensemble de colonne de direction de véhicule automobile, caractérisé en ce qu'il comporte un bras (11) s'étendant à partir de l'étrier (5), dont une extrémité comporte des moyens (12) de fixation sur celui-ci, et l'autre, au moins une languette élastique (16) dirigée vers l'étrier et inclinée vers l'axe du trou (3), de manière que son extrémité s'étende dans le trajet de déplacement de la tête (2) de l'organe (1) lors de l'engagement ou du dégagement de celui-ci dans ou hors du trou correspondant de l'étrier, afin de former une butée anti-recul de maintien de l'organe en position dans le trou, cette languette étant escamotable radialement par la tête de l'organe lors de l'engagement de celui-ci dans ce trou.

2. Dispositif selon la revendication 1, caractérisé en ce que la languette (16) est formée par découpage et déformation d'une portion d'extrémité du bras.

3. Dispositif selon la revendication 1, caractérisé en ce que la languette est formée par une portion repliée de l'extrémité correspondante de ce bras (11).

4. Dispositif selon l'une quelconque des revendications précédentes, caractérisé en ce que les moyens de fixation du bras sur l'étrier comprennent un trou (13) muni de pattes d'accrochage (14) sur un pion (15) relié à l'étrier.

## Patentansprüche

1. Vorrichtung zum Halten eines mit einem Kopf versehenen Klemmelements in einem Loch einer Seitenwand eines Bügels für die Aufnahme eines komplementären Organs, die zum Verbinden zweier Abschnitte einer Lenksäulenbaueinheit eines Kraftfahrzeugs verwendbar ist, dadurch gekennzeichnet, daß sie einen Arm (11) aufweist, der sich von dem Bügel (5), wovon ein Ende Mittel (12) zum Befestigen an diesem enthält und das andere wenigstens eine zum Bügel gerichtete und zur Achse des Lochs (3) geneigte elastische Zunge (16) enthält, in der Weise erstreckt, daß sich sein Ende auf der Bewegungsbahn des Kopfes (2) des Organs (1) bewegt, wenn der Arm mit einem entsprechenden Loch des Bügels in Eingriff gelangt oder dieser Eingriff gelöst wird, um einen Rücklaufverhinderungsanschlag zum Halten des Organs in der Position im Loch zu bilden, wobei diese Zunge durch den Kopf des Organs beim Eingriff desselben in diesem Loch radial versenkbar ist.

2. Vorrichtung nach Anspruch 1, dadurch gekennzeichnet, daß die Zunge (16) durch Zuschneiden und Verformen eines Endabschnitts des Arms gebildet ist.

3. Vorrichtung nach Anspruch 1, dadurch gekennzeichnet, daß die Zunge durch einen umgebogenen Abschnitt des entsprechenden Endes dieses Arms (11) gebildet ist.

4. Vorrichtung nach einem der vorangehenden Ansprüche, dadurch gekennzeichnet, daß die Mittel zum Befestigen des Arms am Bügel ein Loch (13) aufweisen, das mit Haken (14) für den Eingriff mit einem mit dem Bügel verbundenen Vorsprung (15) versehen ist.

## Claims

1. Device for keeping a clamping element equipped with a head in position in a hole in a side wall of a stirrup for receiving a complementary element, capable of being used in order to connect two portions of a steering column assembly of a motor vehicle, characterised in that it has an arm (11) extending from the stirrup (5), of which one end has means (12) for fixing thereon and the other has at least one resilient tab (16) directed towards the stirrup and inclined towards the axis of the hole (3), in such a way that its end extends in the displacement path of the head (2) of the element (1) when the latter is engaged in or disengaged from the corresponding hole in the stirrup, in order to form a non-recoil stop to keep the element in position in the hole, this tab being retractable radially by the head of the element when the latter engages in this hole.

2. Device as claimed in Claim 1, characterised in that the tab (16) is formed by cutting out and deformation of an end portion of the arm.

3. Device as claimed in Claim 1, characterised in that the tab is formed by a bent-back portion of the corresponding end of this arm (11).

4. Device as claimed in any one of the preceding claims, characterised in that the means for fixing the arm on the stirrup comprise a hole (13) equipped with fingers for fastening (14) on a stud (15) connected to the stirrup.
